# FASCICULE DE BREVET EUROPEEN

(11) **EP 3 310 589 B1**
(45) Date de publication et mention de la délivrance du brevet: **09.10.2019**
(21) Numéro de dépôt: 16728323.3
(22) Date de dépôt: 10.06.2016
(51) Int. Cl.: B60C 11/00, B60C 9/20, B60C 9/18, B60C 9/30

(54) **PNEUMATIQUE AVEC UN SOMMET COMPORTANT UNE NAPPE DE RIGIDIFICATION ET UNE BANDE DE ROULEMENT À FORTE ADHÉRENCE**
LUFTREIFEN MIT EINER KRONE MIT VERSTÄRKUNGSLAGE UND LAUFFLÄCHE MIT HOHER BODENHAFTUNG
PNEUMATIC TIRE HAVING A CROWN THAT COMPRISES A REINFORCEMENT PLY AND A HIGH-TRACTION TREAD

(30) Priorité: 16.06.2015 FR 1555491; 20.10.2015 FR 1559996
(43) Date de publication de la demande: 25.04.2018
(73) Titulaire: Compagnie Générale des Etablissements Michelin, 63000 Clermont-Ferrand (FR)
(72) Inventeur: PALLOT, Patrick, 63040 Clermont-Ferrand Cedex 9 (FR); LEVRARD, Benjamin, 63040 Clermont-Ferrand Cedex 9 (FR); REYNAL DE ST-MICHEL, Rémi, 63040 Clermont-Ferrand Cedex 9 (FR)
(74) Mandataire: Bauvir, Jacques
(86) Numéro de dépôt international: PCT/EP2016/063374
(87) Numéro de publication internationale: WO 2016/202702

(56) Documents cités:
- EP-A1- 1 726 458
- EP-A1- 2 708 382
- EP-A2- 0 987 129
- DE-A1-102010 038 199
- FR-A1- 3 007 693

## Description

### Domaine de l'invention

La présente invention est relative aux pneumatiques, et plus particulièrement à un pneumatique dont les performances d'adhérence sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial est un plan perpendiculaire à l'axe de rotation du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan médian du pneumatique, selon la direction axiale ».

### État de la technique

De manière connue en soi, la bande de roulement d'un pneumatique pour application à des véhicules routiers, qu'il soit destiné à équiper un véhicule de tourisme ou un véhicule poids lourd, est pourvue d'une sculpture comprenant des blocs de sculpture délimités par diverses rainures, les unes orientées circonférentiellement, d'autres orientées axialement ou d'autres encore orientées de façon oblique. Les blocs de sculpture peuvent en outre comporter diverses incisions ou lamelles plus fines. Les rainures constituent des canaux destinés à évacuer l'eau lors d'un roulage sur sol mouillé et les parois de ces rainures définissent ce qui est appelé des bords d'attaque et des bords de fuite des éléments de sculpture, en surface de la bande de roulement et en référence au sens du roulage.

Pour améliorer l'adhérence d'un pneumatique, et plus particulièrement pour l'adhérence sur sol sec et sur sol humide pour des roulages non hivernaux, il est bien connu d'utiliser pour la bande de roulement un mélange caoutchouteux de rigidité faible (c'est-à-dire également de dureté faible, d'où la désignation usuelle de mélange mou). Cette diminution de rigidité de la bande de roulement permet à celle-ci de mieux épouser la surface du sol de roulage, notamment de bien épouser la rugosité du sol, et ainsi la surface réelle de contact avec le sol de roulage s'en trouve augmentée et la performance d'adhérence améliorée par rapport à une bande de roulement dont le mélange caoutchouteux est plus rigide.

Un tel choix s'avère très performant pour des pneumatiques dont la sculpture ne comporte pas ou comporte peu de rainures orientées plutôt circonférentiellement, notamment du côté axialement extérieur du pneumatique. Un exemple est donné par le document FR 3 007 693 A1. Cependant, afin de favoriser une bonne évacuation de l'eau et permettre de maintenir la surface de roulement du pneumatique bien en contact avec le sol en utilisation sur sol détrempé, il est nécessaire que la sculpture comporte suffisamment de rainures orientées plutôt circonférentiellement. Dans cette dernière configuration, l'utilisation d'un mélange caoutchouteux de bande de roulement moins rigide favorise le cisaillement des blocs de sculpture, leur basculement, et cela génère de fortes surpressions sur les bords d'attaque des blocs de sculpture, ce qui conduit à des échauffements très importants. Ces surpressions et ces échauffements peuvent contribuer à un endommagement très rapide de la bande de roulement du pneumatique et à une exploitation non optimale du potentiel d'adhérence du mélange de la bande de roulement, notamment le potentiel d'adhérence dans une direction axiale (aussi appelée adhérence transversale).

Pour améliorer la performance d'adhérence transversale de pneumatiques dont la bande de roulement comprend une pluralité de rainures circonférentielles délimitées par des faces latérales en vis-à-vis et un fond de rainure, le document WO 2011/073022 A1 propose de disposer, sous la nappe carcasse et même sous la couche intérieure d'étanchéité, une nappe de renfort comportant des éléments de type câble, orientés sensiblement axialement.

Cependant, l'effet de renforcement d'une telle structure reste limité et une telle structure peut s'avérer insuffisamment endurante. Le document DE 10 2010 038199 A1 ou son équivalent WO2012/048930 A1 donne un exemple de nappe de renfort de protection, située radialement à l'extérieur de deux nappes composées de renforts monofilament, formant avec la nappe carcasse la triangulation typique des pneumatiques à carcasse radiale, dans lequel les renforts de la nappe de renfort, forment un angle compris entre 50° et 90 ° avec la direction circonférentielle du pneumatique. Le document EP 0 987 129 A2 donne un exemple de nappe de renfort de protection, située cette fois encore radialement à l'extérieur de deux nappes formant avec la nappe carcasse la triangulation typique des pneumatiques à carcasse radiale, dont l'objectif est d'améliorer la résistance à la perforation ; là aussi, la nappe de renfort comporte des éléments de type câble, orientés d'un angle proche de la direction transversale. Cependant, ces enseignements concernent un test dit « Plunger Test », ce qui est un objectif sans rapport avec le contexte de la présente invention.

L'objectif de la présente invention est de proposer une meilleure alternative afin de réaliser un pneumatique capable d'une bien meilleure performance en adhérence transversale.

### Brève description de l'invention

L'invention concerne un pneumatique comportant une armature de ceinture, disposée dans le sommet, le plus souvent radialement à l'extérieur d'une armature de carcasse. Selon la direction radiale, l'armature de ceinture est un empilage d'au moins deux nappes couplées avec une nappe de carcasse ; lesdites au moins deux nappes sont constituées le plus souvent de câbles métalliques, lesdits câbles métalliques formant typiquement un angle avec la direction circonférentielle compris entre +10° et +40° pour l'une de ces nappes et compris entre -10° et -40° pour l'autre de ces nappes.

L'invention a pour objet un pneumatique comportant :
- deux bourrelets ;
- deux flancs reliés aux bourrelets ;
- un sommet relié de chaque côté à l'extrémité radialement extérieure de chacun des flancs, le sommet comportant :
   - une armature de ceinture ayant une largeur axiale W,
   - une bande de roulement en matériau élastomérique, la bande de roulement comprenant une pluralité de blocs de sculpture, deux blocs de sculpture axialement adjacents étant séparés par une rainure s'étendant au moins en partie circonférentiellement, chacune rainure étant délimitée radialement vers l'intérieur par un fond de rainure,
caractérisé en ce que le matériau élastomérique constitutif de la bande de roulement a un module dynamique de cisaillement G*, à 60°C et sous une contrainte alternée à 10 Hz de 0.7 MPa, inférieur à 1.25 MPa, et en ce que le sommet comporte une nappe de rigidification constituée d'éléments filaires de renfort rigides en compression, lesdits éléments filaires de renfort formant, avec la direction circonférentielle, un angle compris entre 50° et 90°, ladite nappe de rigidification étant disposée radialement à l'extérieur de l'armature de ceinture et axialement sous au moins une rainure de la bande de roulement, et s'étendant axialement au moins sur une largeur WR valant au minimum 50% de la largeur axiale W de l'armature de ceinture.

On entend par « rigides en compression » des éléments dont le module de Young en compression selon la direction d'élancement des éléments filaires est supérieur à 1 GPa, et préférentiellement 10 GPa. A titre d'exemple, les éléments filaires de renfort sont constitués par des câbles métalliques. De nombreux câbles en acier confèrent à la nappe de rigidification une rigidité convenable. Les éléments filaires de renfort peuvent aussi être des monofilaments. Ils peuvent aussi être formés par assemblage rigides en compression de fibres organiques, ou encore des fibres inorganiques comme des fibres de verre, carbone, des fibres de type aramide, noyés dans une matrice suffisamment rigide. La section des mono filaments peut être circulaire ou aplatie, par exemple de section elliptique ou rectangulaire.

Pour offrir les performances de renforcement en compression apportées par l'invention, de façon avantageuse, il convient que les éléments filaires de renforcement soient espacés dans la nappe de rigidification d'un pas au plus égal à trois fois la plus grande dimension de leur section. La nappe de rigidification s'oppose ainsi, par sa forte raideur en compression, à la flexion du sommet en dehors de son plan et ainsi s'oppose au basculement des éléments de sculpture et permet ainsi de conserver une surface de contact avec le sol de roulage importante ; elle permet de limiter les surpressions sur le bord d'attaque des blocs de sculpture et ainsi de limiter les échauffements.

Ainsi, la nappe de rigidification permet d'utiliser pour la bande de roulement des mélanges considérablement plus tendres que dans les pneumatiques pour véhicules de tourisme et ceci sans préjudice significatif de leur longévité kilométrique. De façon avantageuse, le matériau élastomérique constitutif de la bande de roulement a un module dynamique de cisaillement G*, à 60°C et sous une contrainte alternée à 10 Hz de 0.7 MPa, inférieur à 1.25 MPa, c'est-à-dire un matériau confiné jusqu'avant la présente invention à des applications en compétition seulement.

### Brève description des figures

Les objets de l'invention sont maintenant décrits à l'aide du dessin annexé, dans lequel :
- la figure 1 représente de manière très schématique (sans respect d'une échelle spécifique), une coupe radiale d'un pneumatique conforme à un mode de réalisation de l'invention ;
- la figure 2 représente de manière schématique une vue radiale, avec écorchés, du pneumatique représenté à la figure 1.
- les figures 3 à 8 sont des coupes radiales partielles du sommet de pneumatiques illustrant des variantes de réalisation de l'invention.

### Description détaillée de l'invention

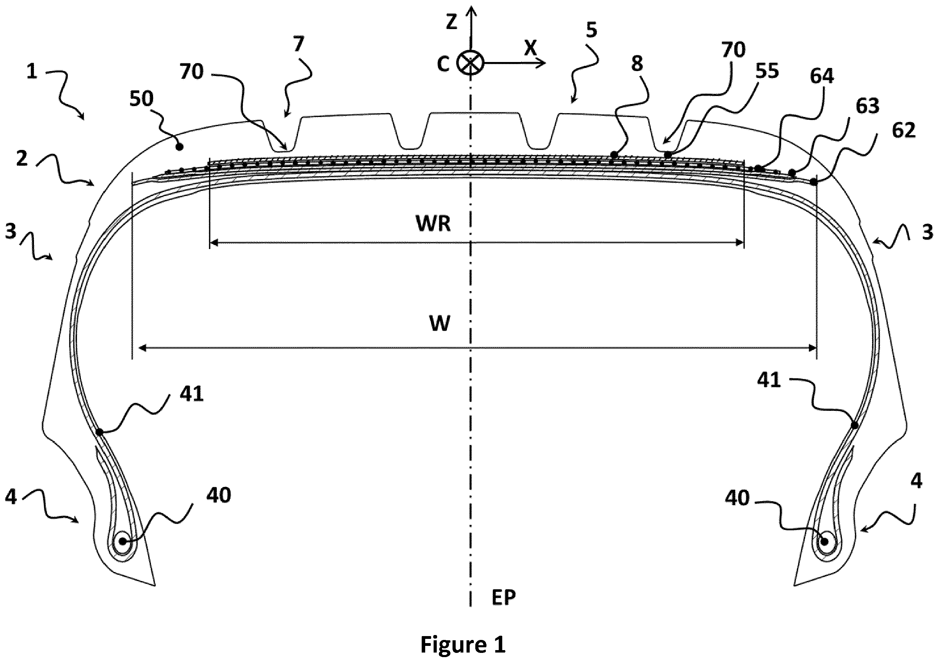

On voit à la figure 1 un pneumatique 1 comprenant un sommet 2, deux flancs 3 reliés chacun à un bourrelet 4. Le sommet 2 est relié de chaque côté à l'extrémité radialement extérieure de chacun des deux flancs. Le sommet 2 comporte une bande de roulement 5. La figure 1 indique un plan équatorial EP, plan perpendiculaire à l'axe de rotation du pneumatique, situé à mi-distance des deux bourrelets 4 et passant par le milieu de l'armature de ceinture ; la figure 1 indique aussi, par des flèches disposées juste au-dessus de la bande de roulement 2, sur le plan équatorial EP, les directions axiale X, circonférentielle C et radiale Z.

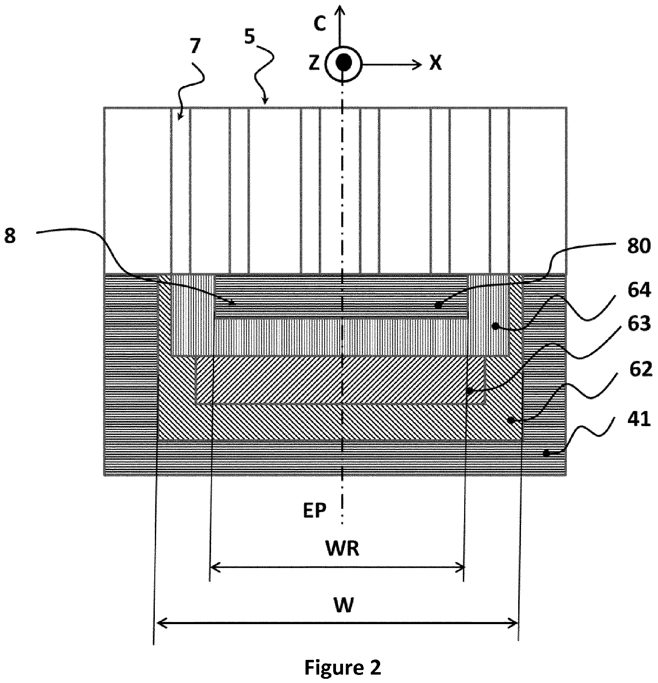

Chaque bourrelet comporte une tringle 40 ; une nappe de carcasse 41 (également visible à la figure 2) est enroulée autour de chaque tringle 40. La nappe de carcasse 41 est radiale et est de manière connue en soi constituée par des câbles (dans ce cas de mise en oeuvre, des câbles textiles) disposés sensiblement parallèlement les uns aux autres et s'étendant d'un bourrelet à l'autre de façon telle qu'ils forment un angle compris entre 80° et 90° avec le plan équatorial EP.

Le sommet 2 comporte (voir figures 1 et 2) une armature de ceinture comportant ladite nappe de carcasse 41 et deux nappes de ceinture 62, 63. De façon très classique, les nappes de ceinture 62, 63 sont formés par des câbles métalliques arrangés parallèlement entre eux. De façon bien connue, les éléments de renforcement que forment les câbles de la nappe de carcasse 41 et les câbles des nappes de ceinture 62, 63 sont orientés selon au moins trois directions différentes de façon à former une triangulation. L'armature de ceinture est de largeur axiale W, celle-ci étant mesurée d'une extrémité axiale à l'autre de la plus large (62) des nappes de ceinture, c'est-à-dire la plus large des nappes formant une triangulation avec la ou les nappes de carcasse.

La bande de roulement 5 comprend une pluralité de blocs de sculpture 50. Deux blocs de sculpture 50 axialement adjacents sont séparés par une rainure 7 s'étendant au moins en partie circonférentiellement ; chacune rainure 7 est délimitée radialement vers l'intérieur par un fond 70 de rainure.

L'armature de ceinture du pneumatique 1 comporte une nappe de frettage 64 constituée de renforts de frettage formé par des fibres organiques ou polyamide aromatique ou en aramide ou sont formés de câbles hybrides contenant des fibres d'aramide, lesdits renforts de frettage formant, avec la direction circonférentielle un angle au plus égal à 5°. La nappe de frettage 64 comporte une seule couche de renforts de frettage. En variante d'exécution, la nappe de frettage est constituée de plusieurs couches de renforts de frettage.

Selon l'invention, le pneumatique 1 comporte une nappe de rigidification 8 que l'on aperçoit aux figures 1 et 2 ; celle-ci est formée, selon un mode particulier de réalisation de l'invention, par des câbles en acier. Les câbles en acier sont des câbles 4.26, arrangés selon un angle de 90° avec un pas de 1.25 mm. La nappe de frettage 64 est disposée radialement à l'extérieur des nappes de ceinture 62, 63, et est disposée radialement intérieurement à la nappe de rigidification 8. La nappe de rigidification 8 est donc, dans cette variante, disposée radialement juste à l'extérieur de la nappe de frettage 64. La nappe de rigidification 8 est disposée radialement et axialement sous la (ou, selon les modes de réalisation, sous au moins une) rainure 7 de la bande de roulement 5, donc sous le fond 70 de rainure 7.

Les éléments filaires de renfort de ladite nappe de rigidification 8 (ici, les câbles) sont orientés essentiellement radialement : les expérimentations du déposant montrent que l'effet de rigidification selon l'invention est sensiblement obtenu avec un angle compris entre 50° et 90°, et de préférence un angle supérieur à 85°. La nappe de rigidification telle que proposée par l'invention a en effet deux fonctions principales :
- réaliser une poutre de flexion de type « poutre sandwich composite » en travaillant avec la nappe carcasse ; la nappe doit donc avoir un angle proche de la nappe carcasse pour renforcer la rigidité de flexion méridienne du sommet ;
- augmenter la rigidité de flexion sur chant de l'armature sommet, en augmentant la rigidité de cisaillement de la nappe dans son plan ; celle-ci est maximale pour un angle de nappe à 45°.

La plage d'angle indiquée ci-dessus permet ainsi de limiter les flexions dans le plan et hors plan du sommet du pneu sous un effort transversal en augmentant d'une part la rigidité de flexion méridienne du sommet (hors plan), ce qui limite le basculement des blocs de sculptures par flexion, et en augmentant d'autre part la rigidité de flexion sur chant du sommet (dans le plan radial).

On a vu que le matériau constitutif de la bande de roulement 5 est un matériau élastomérique de module dynamique de cisaillement G*, à 60°C et sous une contrainte alternée à 10 Hz de 0.7 MPa, inférieur à 1.25 MPa. On entend par « matériau constitutif de la bande de roulement » le matériau qui comprend au moins 50% du volume compris entre la surface de contact avec le sol à l'état neuf et un niveau correspondant à 1,6 mm vers l'extérieur du fond 70 de rainure 7 (1,6 mm étant la hauteur habituelle des témoins d'usure).

De manière à ne pas augmenter le volume du pneumatique, la nappe de rigidification selon l'invention peut se substituer avantageusement aux matériaux présents en général à la base de la bande de roulement. On trouve en général sous le fond de rainure une couche d'un matériau élastomérique de l'ordre de 2 mm qui amène une protection de l'armature de ceinture aux agressions que subit le pneumatique en usage. La nappe de rigidification de la présente invention peut apporter une protection suffisante contre ces agressions, ce qui permet de diminuer l'épaisseur de ladite couche de matériau élastomérique dont on a parlé ci-dessus, par exemple réduire à au plus 1,5 mm au lieu de 2 mm, voire aller jusqu'à une épaisseur d'au moins 0,5 mm. Cette réduction d'épaisseur permet par ailleurs d'augmenter la rigidité de cisaillement de la bande de roulement et ainsi de contribuer à améliorer la tenue de route en transversal du véhicule.

Il est à noter que la nappe de rigidification est en général un semi-fini comportant non seulement les câbles en acier mais aussi une gomme dite de calandrage. C'est en général le cas de toutes les nappes, que ce soit la ou les nappes de carcasse, les nappes de ceinture, la nappe de frettage : elles sont constituées par des éléments de renforcement filaires, monofilamentaires ou câblés, enrobés de gomme de calandrage les liant entre eux pour former un semi-fini de fabrication ; la gomme de calandrage est de composition choisie en général pour répondre à la fois aux impératifs de procédé de fabrication et aussi pour conférer au pneumatique en tant que produit fini des caractéristiques appropriées. Rappelons au passage qu'il existe des procédés de fabrication où la dépose de câbles de nappe de ceinture est faite fil par fil sur une ébauche de pneumatique en cours de construction, sans passer par l'étape de fabrication d'un semi-fini comme une nappe calandrée ; l'invention est compatible avec un tel procédé. Toutes ces considérations ne sont qu'un rappel de données techniques bien connues de l'homme du métier et ne font pas en soi partie de l'invention.

La nappe de rigidification 8 s'étend axialement sur une largeur WR. A titre d'exemple, la largeur WR vaut 140 mm pour un pneumatique de dimension 225/45 R 17, soit 70% de la largeur W de l'armature sommet. De façon avantageuse, la nappe de rigidification 8 est proche de la fibre neutre mécanique de l'ensemble structurel formé par le sommet 2 du pneumatique. Dans un autre mode de réalisation, au moins 70% de ladite largeur WR de la nappe de rigidification est disposée d'un côté du plan médian EP, à savoir le côté destiné à être monté à l'extérieur du véhicule, c'est dire celui le plus sollicité dans des virages pris à vitesse soutenue. Dans certaines mises en oeuvre de l'invention, le pneumatique est alors asymétrique. Cependant, ceci n'a aucun caractère impératif, le pneumatique selon l'invention pouvant très bien être symétrique axialement. De préférence, la nappe de rigidification s'étend sur une largeur WR valant au minimum 50% de la largeur axiale W de l'armature de ceinture et de préférence au moins 70%. Avantageusement, la nappe de rigidification s'étend sur une largeur WR valant au maximum 100% de la largeur axiale W de l'armature de ceinture.

L'invention trouve une application tout particulièrement intéressante lorsque les rainures 7 ou certaines d'entre elles s'étendent circonférentiellement. Il peut très bien s'agir de rainures qui ne sont pas orientées exactement circonférentiellement mais peuvent être obliques par rapport au plan équatorial EP ; comme les moyens de l'invention permettent de combattre efficacement la tendance au basculement de blocs de sculpture et la tendance à la flexion du sommet lorsque la bande de roulement est en gomme molle de façon à favoriser l'adhérence, et que la flexion du sommet et le basculement de la sculpture est particulièrement préjudiciable sur sollicitations du pneumatique dans le sens transversal, l'invention trouve un terrain d'application tout particulièrement intéressant en présence de rainures au moins en partie orientées circonférentiellement. Bien entendu, il peut en outre y avoir des rainures orientées principalement axialement, et dans ce cas l'invention permet de combattre le basculement des blocs de sculpture 50 en cas de sollicitation longitudinale, provenant d'un couple important, par exemple en freinage d'urgence. La nappe de rigidification 8 fait partie de l'armature de ceinture du pneumatique 1 ; la nappe de rigidification 8 est en liaison directe avec les nappes de ceinture 62, 63 et avec la nappe de frettage 64. Cela permet de rigidifier le sommet 2 et limite efficacement, voire empêche le basculement des blocs de sculpture 50 de la bande de roulement 5.

L'ajout de la nappe de rigidification 8 contribue à un fort couplage mécanique avec les nappes de ceinture 62 et 63 en formant un triangle indéformable, et ce particulièrement au centre du pneu, lorsque le couplage est bien établi. Ainsi lorsque le pneumatique est centrifugé, le centre du pneumatique au voisinage du plan équateur EP ne se déforme pas alors que les épaules subissent une déformation (ou extension radiale) sous l'effet des forces d'inertie. Cette différence d'extension radiale sous l'effet de la centrifugation cause alors une certaine fragilité du pneumatique à hautes vitesses et peut causer une avarie prématurée du pneumatique. En conséquence, dans une mise en oeuvre tout particulièrement avantageuse, l'invention comporte une frette particulièrement adaptée pour empêcher toute extension radiale significative selon le niveau de vitesse maximale que l'on se fixe pour le pneumatique.

Un moyen d'ajuster concrètement la conception d'un pneumatique en fonction d'un cahier des charges de performance donné consiste en ce que la nappe de frettage dépasse axialement d'au moins 3 mm et préférentiellement d'au moins 5 mm le bord de la plus large (62) des nappes de ceinture, pour renforcer la rigidité d'extension relative du pneu aux épaules. On reviendra sur cet aspect avec la description de la cinquième variante de réalisation ci-dessous. Un autre moyen consiste à utiliser des matériaux constitutifs de la nappe de frettage beaucoup plus rigide en extension, comme l'aramide ou des câbles hybrides comme l'aramide. Un autre moyen encore consiste à ce que cette nappe de frettage soit constituée de plusieurs couches de renforts à l'épaule, plus nombreuses qu'au centre du pneumatique, là où le couplage avec la nappe de rigidification 8 joue déjà ce rôle. Enfin, citons encore un autre moyen qui consiste à ce que la nappe de frettage aux épaules soit précontrainte, soit parce qu'elle a été posée sur un tambour de fabrication à un rayon plus faible aux épaules qu'au centre, avant conformation du pneumatique dans la presse de vulcanisation, soit parce qu'elle a été posée sur un tambour de fabrication en tension avec une tension supérieure aux épaules qu'au centre.

### Tests

L'invention a été testée en réalisant des pneumatiques dans la dimension 225/45 R 17. Le pneumatique de référence est un pneumatique MICHELIN Pilot Sport 3. Les pneumatiques de test sont tous dérivés du pneumatique MICHELIN Pilot Sport 3 pour les éléments non spécifiques de la présente invention et pour lesquels on ne trouve pas d'indication ci-dessous.

| VARIANTES | CHRONO |
|---|---|
| Pneumatique avec une bande de roulement G* 60°C 10 Hz 1.4 MPa **sans** nappe de rigidification | 2 min 18.7 s |
| Pneumatique avec une bande de roulement G* 60°C 10 Hz 1.4 MPa **avec** nappe de rigidification | 2 min 18.7 s |
| Pneumatique avec une bande de roulement G* 60°C 10 Hz 1.1 MPa **sans** nappe de rigidification | 2 min 18.3 s |
| Pneumatique avec une bande de roulement G* 60°C 10 Hz 1.1 MPa **avec** nappe de rigidification | 2 min 17.6 s |
| Pneumatique avec une bande de roulement G* 60°C 10 Hz 0.9 MPa **sans** nappe de rigidification | 2 min 16.9 s |
| Pneumatique avec une bande de roulement G* 60°C 10 Hz 0.9 MPa **avec** nappe de rigidification | 2 min 15.7 s |
| Pneumatique avec une bande de roulement G* 60°C 10 Hz 0.4 MPa **sans** nappe de rigidification | 2 min 15.7 s |
| Pneumatique avec une bande de roulement G* 60°C 10 Hz 0.4 MPa **avec** nappe de rigidification | 2 min 13.5 s |

Le tableau ci-dessus présente dans chaque cas le chrono avec et sans la nappe de rigidification. Le pneumatique de référence réalise un chrono en 2 minutes 18.7 secondes. La différence est jugée significative sur ce test lorsque l'on atteint un gain de 0.3 seconde.

Pour la réalisation d'un matériau élastomérique constitutif de la bande de roulement 5 ayant un module dynamique de cisaillement G* valant 0.9MPa, on peut se reporter par exemple à la formulation ci-dessous :

**Tableau 1 : formulation**

| Composition | Exemple (pce) |
|---|---|
| SBR (a) | **100** |
| Silice (b) | **110** |
| Agent de couplage (c) | **9** |
| Plastifiant liquide (d) | **20** |
| Plastifiant résine (e) | **50** |
| Noir | **5** |
| Oxyde de zinc | **3** |
| Acide stéarique | **2** |
| Antioxydant (f) | **2** |
| Accélérateur (g) | **2** |
| DPG | **2** |
| Soufre | **1** |

| | |
|---|---|
| avec: (a) SBR avec 27% styrène, butadiène -1,2 :5%, cis-1,4 :15%, trans -1,4: 80% Tg -48°C (b) Silice « Zeosill 165MP » de la société Solvay de surface BET 160m²/g (c) Silane TESPT « SI69 » de la société Evonik (d) Huile TDAE « Flexon 630 » de la société Shell (e) Résine « Escorez 2173 » de la société Exxon (f) Antioxydant « Santoflex 6PPD » de la société Solutia (g) Accélérateur « Santocure CBS » de la société Solutia | |

**Tableau 2: Propriétés mécaniques des compositions après vulcanisation**

| Composition | Exemple |
|---|---|
| Module G* à 60°C (MPa) | **0.9** |
| Tg (°C) Tanδ max | **-10** |

Les essais de chrono sec ont eu lieu sur le circuit de Charade près de Clermont-Ferrand, avec un véhicule Renault® Clio® Cup (pression AV 2.3 b et ARR 2.7 b). Plusieurs pneus ont été fabriqués avec des matériaux de différentes rigidités pour la bande de roulement : le module dynamique de cisaillement G* à 60°C et sous une contrainte alternée à 10 Hz de 0.7 MPa s'étage de 1.4 MPa, 1.1 MPa, 0.9 MPa et 0.4 MPa. L'homme du métier saura adapter la formulation pour faire varier le module dynamique de cisaillement G* dans la plage indiquée ci-dessous, notamment les paliers à 0.9MPa, par exemple, en augmentant la proportion de plastifiant. Pour résumer l'aspect de l'invention portant sur le module dynamique de cisaillement G* à 60°C et sous une contrainte alternée à 10 Hz de 0.7 MPa du matériau constitutif de la bande de roulement, celui-ci est de préférence inférieur ou égal à 1.1 MPa, et de façon avantageuse inférieur ou égal à 0.9 MPa.

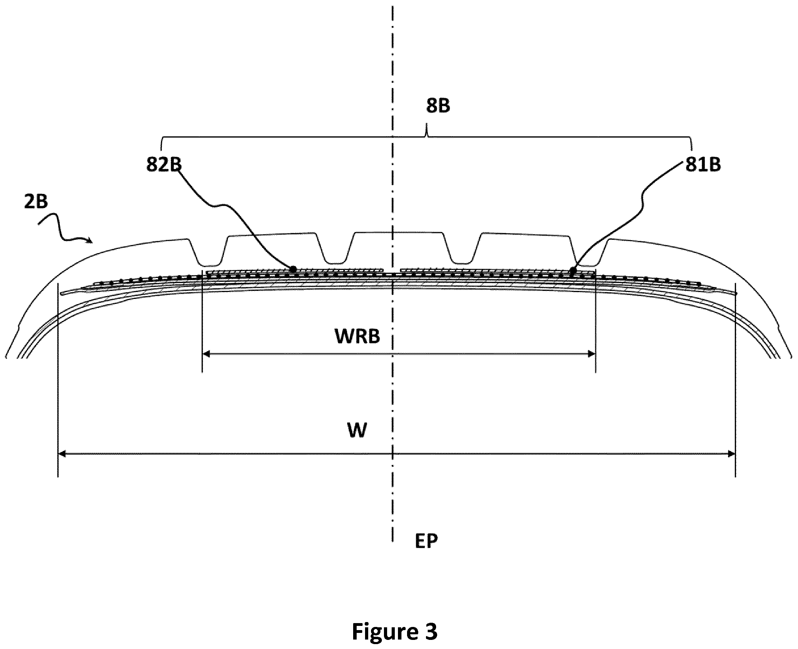

A la figure 3, on voit une coupe radiale d'un sommet 2B d'un pneumatique selon une première variante de réalisation dans laquelle la nappe de rigidification 8B est constituée est conformée axialement en plusieurs sections de nappes séparées axialement par une zone dépourvue d'éléments filaires de renfort : on voit plusieurs sections de nappes de rigidification (en l'occurrence, deux sections de nappes de rigidification) 81B et 82B. La nappe de rigidification 8B est de largeur WRB totale (cumul des largeurs des deux sections de nappes de rigidification 81B et 82B) valant au moins 50% de la largeur axiale W de l'armature de ceinture. Pour le reste, cette variante est identique au premier exemple, ce qui fait qu'il n'est pas utile de décrire les autres éléments du pneumatique.

Cette solution permet de limiter le couplage de la nappe de rigidification avec les nappes de ceinture au centre du pneu, ce qui permet de limiter la rigidification au centre du pneumatique, ce qui se traduit par une meilleure tenue en vitesse limite de l'enveloppe et par un impact réduit sur le bruit extérieur. Cette variante permet de gagner 15 km/h en vitesse limite de l'enveloppe et un gain de 0.7 dB en bruit extérieur dit « coast-by » selon la norme en vigueur, pour un chrono identique à la variante en une seule nappe continue.

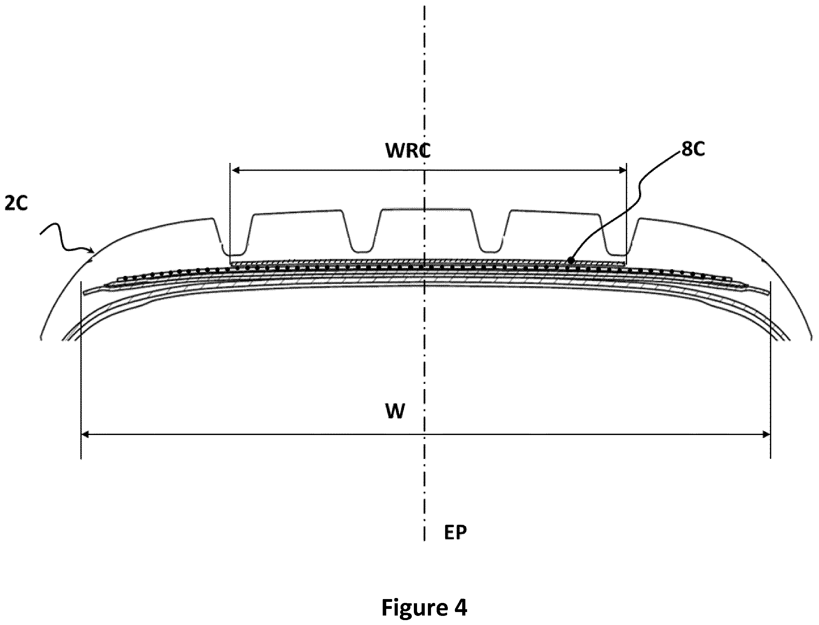

A la figure 4, on voit une coupe radiale d'un sommet 2C d'un pneumatique selon une deuxième variante de réalisation dans laquelle la nappe de rigidification 8C est moins large de 30 mm (largeur 110 mm au lieu de 140 mm), soit une largeur de 50% de l'armature sommet au lieu de 70% dans les versions précédentes. Ceci permet de réduire la masse du pneumatique tout en garantissant un très bon niveau de performance. Pour le reste, cette variante est identique au premier exemple, ce qui fait qu'il n'est pas utile de décrire les autres éléments du pneumatique.

Cette variante permet un gain en masse du pneumatique et également permet un gain en résistance ou roulement par le positionnement de la nappe de rigidification là où le rayon de courbure du sommet du pneumatique est le plus grand, évitant ainsi de brider par la nappe de rigidification la flexion méridienne.

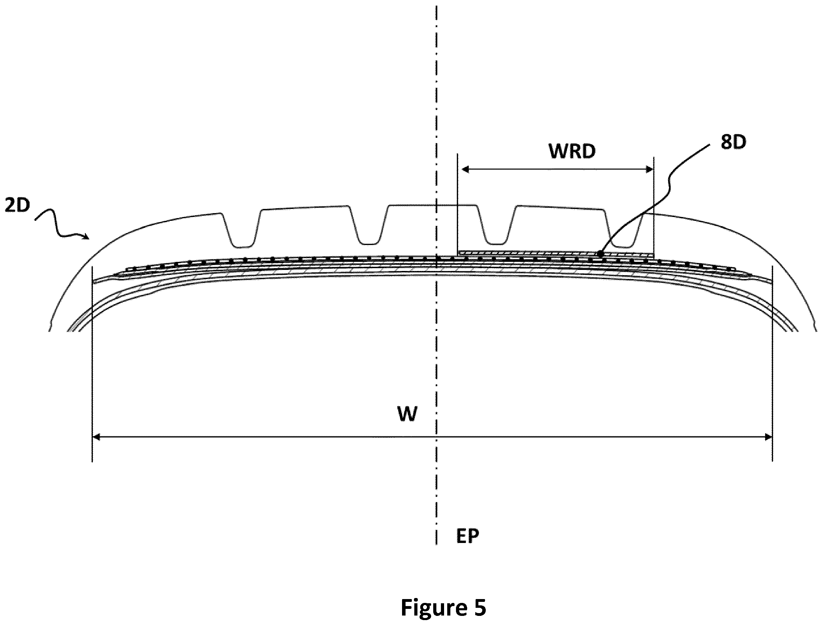

A la figure 5, on voit une coupe radiale d'un sommet 2D d'un pneumatique selon une troisième variante de réalisation dans laquelle la nappe de rigidification 8D est de largeur réduite et est positionnée de façon dissymétrique. C'est plus particulièrement sous les blocs de sculpture destinés à être positionnés du côté extérieur du véhicule qu'il est tout particulièrement intéressant de rigidifier le sommet. Ceci permet de réduire la masse du pneumatique tout en garantissant un très bon niveau de performance. Pour le reste, cette variante est identique au premier exemple, ce qui fait qu'il n'est pas utile de décrire les autres éléments du pneumatique.

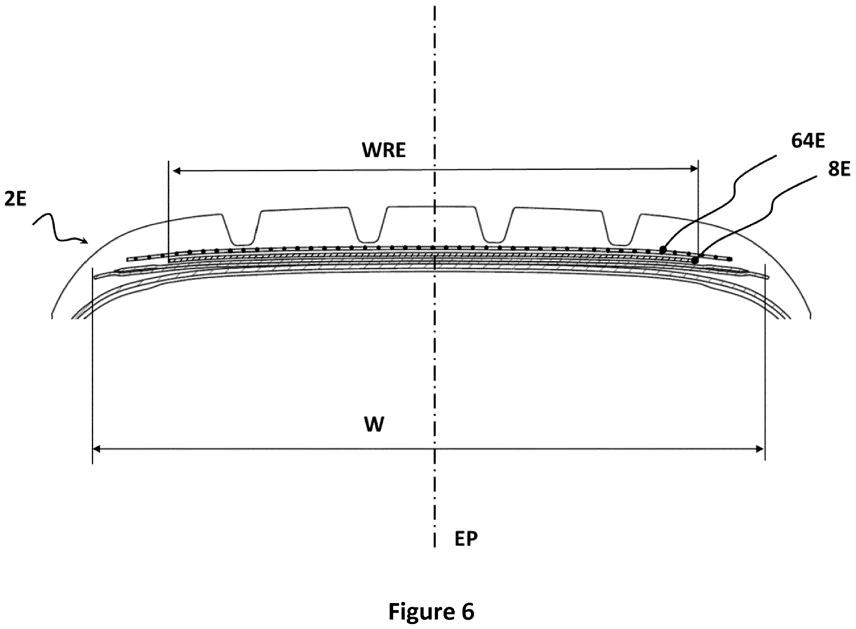

A la figure 6, on voit une coupe radiale d'un sommet 2E d'un pneumatique selon une quatrième variante de réalisation dans laquelle la nappe de frettage 64E est disposée radialement extérieurement à la nappe de rigidification 8E. Pour le reste, cette variante est identique au premier exemple, ce qui fait qu'il n'est pas utile de décrire les autres éléments du pneumatique. Cette variante permet un meilleur couplage fonctionnel de la nappe de rigidification avec le sommet du pneumatique car son positionnement est plus proche de la fibre neutre du sommet (considéré comme une poutre), ce qui renforce la rigidité du sommet en flexion dans son plan (avec un bénéfice en poussée de dérive du pneumatique) sans s'opposer à la mise à plat du sommet lorsque celui-ci passe dans l'aire de contact avec le sol, indispensable pour une bonne adhérence du pneumatique sur le sol.

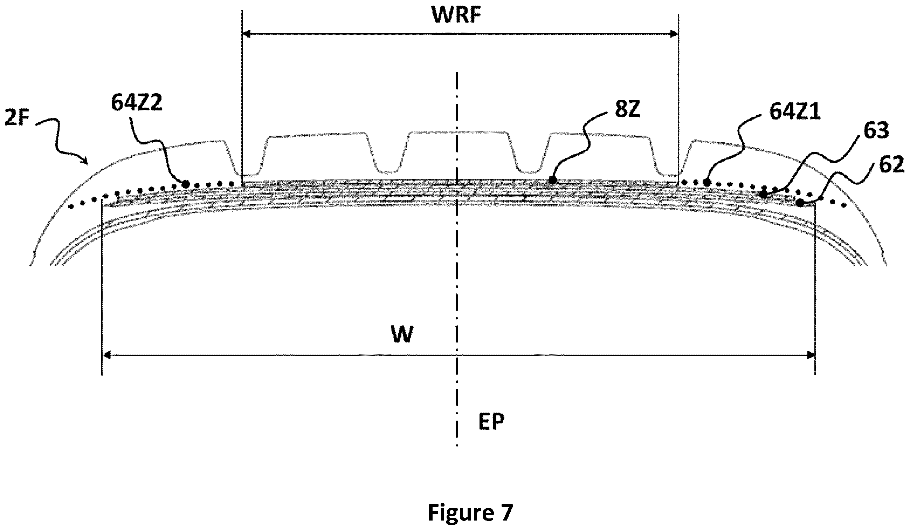

A la figure 7, on voit une coupe radiale d'un sommet 2F d'un pneumatique selon une cinquième variante de réalisation dans laquelle la nappe de frettage est formée par au moins deux zones de frettage 64Z1, 64Z2 axialement séparées, disposées de part et d'autre de la nappe de rigidification 8Z. A la courbure du sommet prêt, la nappe de frettage et la nappe de rigidification sont ainsi disposées à la même distance radiale. Sur la même figure, et suivant un autre aspect utilisable indépendamment de la réalisation de la frette en deux zones de frettage, on voit que la nappe de frettage (zone de frettage 64Z1 ensemble avec la zone de frettage 64Z2) déborde axialement par rapport à chacune des extrémités axiales de la plus large (62) des nappes de ceinture sur une distance valant au moins 3 mm. De préférence, cette distance vaut de 5 mm à 10 mm. Ce dernier aspect peut être mis en oeuvre avec une nappe de frettage continue telle qu'illustrée dans les autres modes de réalisation.

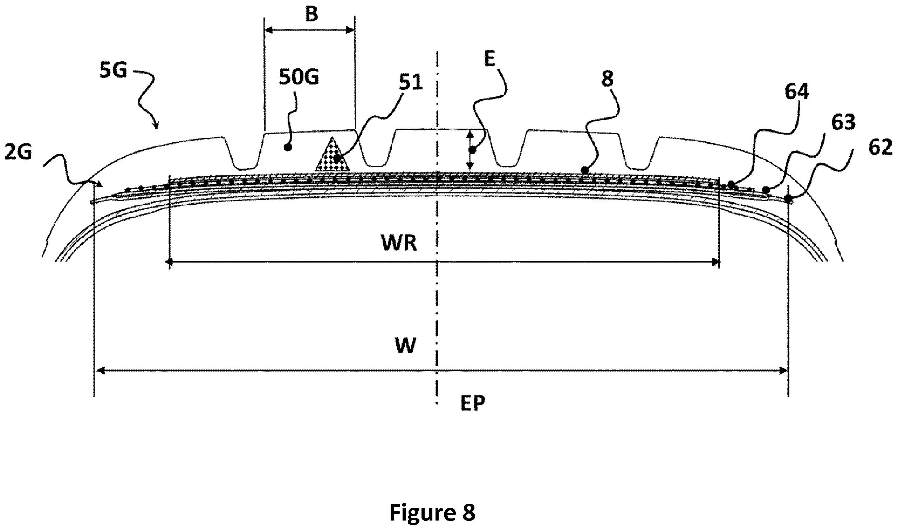

A la figure 8, on voit une coupe radiale d'un sommet 2G d'un pneumatique selon une sixième variante de réalisation dans laquelle au moins un bloc de sculpture 50G comporte un élément d'amarrage 51 s'étendant radialement de la surface radialement extérieure de ladite couche de rigidification 8 vers l'extérieur de la bande de roulement 5G jusqu'à une hauteur radiale supérieure à 75% de l'épaisseur radiale E de la bande de roulement. Ledit élément d'amarrage est de largeur axiale variable, depuis une valeur maximale inférieure à 50% et de préférence inférieure à 25% de la largeur axiale B dudit bloc 51G, ladite largeur axiale allant en décroissant lorsque l'on se déplace radialement vers le haut. L'angle des deux parois latérales dudit élément d'amarrage est de préférence compris entre 35 et 45 degrés, soit par exemple 40°, comme illustré à la figure 8. Ledit élément d'amarrage est constitué d'un mélange caoutchouteux de rigidité supérieure à la rigidité du mélange caoutchouteux du reste de la bande de roulement. On entend par « rigidité » du mélange son module dynamique de cisaillement G* à 60°C et sous une contrainte alternée à 10 Hz de 0.7 MPa. Par exemple, de façon avantageuse, ledit matériau constitutif de l'élément d'amarrage a de préférence un module dynamique G* mesuré à 60°C, à 10 Hz et sous une contrainte de cisaillement alterné de 0.7 MPa supérieur à 20 MPa, et très préférentiellement supérieur à 30 MPa.

## Revendications

1. Pneumatique (1) comprenant :
- deux bourrelets (4) ;
- deux flancs (3) reliés aux bourrelets (4) ;
- un sommet (2) relié de chaque côté à l'extrémité radialement extérieure de chacun des deux flancs, le sommet comportant :
▪ une armature de ceinture ayant une largeur axiale W,
▪ une bande de roulement (5), la bande de roulement comprenant une pluralité de blocs de sculpture (50), deux blocs de sculpture axialement adjacents étant séparés par une rainure (7) s'étendant au moins en partie circonférentiellement, chacune rainure étant délimitée radialement vers l'intérieur par un fond (70) de rainure,
le matériau constitutif de la bande de roulement (5) ayant un module dynamique de cisaillement G*, à 60°C et sous une contrainte alternée à 10 Hz de 0.7 MPa, inférieur à 1.25 MPa, **caractérisé en ce que** le sommet (2) comporte une nappe de rigidification (8) constituée d'éléments filaires de renfort rigides en compression, lesdits éléments filaires de renfort formant, avec la direction circonférentielle C, un angle compris entre 50° et 90°, lesdits éléments filaires de renfort étant disposés radialement à l'extérieur de l'armature de ceinture et axialement sous au moins une rainure (7) de la bande de roulement, et s'étendant axialement au moins sur une largeur WR valant au minimum 50% de la largeur axiale W de l'armature de ceinture.

2. Pneumatique selon la revendication 1, dans lequel le matériau constitutif de la bande de roulement (5) a un module dynamique de cisaillement G*, à 60°C et sous une contrainte alternée à 10 Hz de 0.7 MPa, inférieur à 1.1 MPa.

3. Pneumatique selon la revendication 1, dans lequel le matériau constitutif de la bande de roulement (5) a un module dynamique de cisaillement G*, à 60°C et sous une contrainte alternée à 10 Hz de 0.7 MPa, inférieur à 0.9 MPa.

4. Pneumatique selon la revendication 1, dans lequel le module de Young en compression selon la direction d'élancement des éléments filaires de la nappe de rigidification (8) est supérieur à 1 GPa.

5. Pneumatique selon l'une des revendications 1 à 4, dans lequel la nappe de rigidification (8) est disposée avec interposition d'une couche d'un matériau élastomérique (55) d'au moins 0.5 mm et au plus 1.5 mm entre le fond de rainure et ladite nappe de rigidification.

6. Pneumatique selon l'une des revendications 1 à 5, dans lequel au moins 70% de ladite largeur WR de la nappe de rigidification (8) est disposé d'un côté du plan médian perpendiculaire à l'axe de rotation du pneumatique.

7. Pneumatique selon l'une quelconque des revendications 1 à 6, dans lequel la nappe de rigidification (8) s'étend sur une largeur WR valant au minimum 70% et au maximum 100% de la largeur axiale W de l'armature de ceinture.

8. Pneumatique selon l'une quelconque des revendications 1 à 7, dans lequel la nappe de rigidification (8B) est conformée axialement en plusieurs sections (81B, 82B) de nappe de rigidification séparées axialement par une zone dépourvue d'éléments filaires de renfort.

9. Pneumatique selon l'une quelconque des revendications 1 à 8, dans lequel les éléments filaires de renfort forment avec la direction circonférentielle un angle supérieur à 85°.

10. Pneumatique selon l'une des revendications 1 à 9, comportant une nappe de frettage (64) constituée de renforts de frettage, lesdits renforts de frettage formant, avec la direction circonférentielle un angle au plus égal à 5°.

11. Pneumatique selon la revendication 10, dans lequel la nappe de frettage (64E) est disposée radialement extérieurement à la nappe de rigidification (8E).

12. Pneumatique selon la revendication 10, dans lequel la nappe de frettage (64) est disposée radialement intérieurement à la nappe de rigidification (8).

13. Pneumatique selon l'une des revendications 10 à 12, selon lequel la nappe de frettage est formée par au moins deux zones de frettage (64Z1, 64Z2) axialement séparées, disposées de part et d'autre de la nappe de rigidification (8Z).

14. Pneumatique selon l'une des revendications 10 à 13, dans lequel la nappe de frettage ou les deux zones de frettage (64Z1, 64Z2) débordent axialement par rapport à chacune des extrémités axiales de la plus large (62) des nappes de ceinture sur une distance valant au moins 3 mm.

15. Pneumatique selon l'une des revendications 1 à 10 ou 12 à 14, dans lequel au moins un bloc de sculpture (50) comporte un élément d'amarrage (51) s'étendant radialement de la surface radialement extérieure de ladite nappe de rigidification (8) vers l'extérieur de la bande de roulement jusqu'à une hauteur radiale supérieure à 75% de l'épaisseur radiale (E) de la bande de roulement, dans lequel ledit élément d'amarrage est de largeur axiale variable, depuis une valeur maximale inférieure à 25% de la largeur axiale (B) dudit bloc, ladite largeur axiale allant en décroissant lorsque l'on se déplace radialement vers le haut, ledit élément d'amarrage étant constitué d'un mélange caoutchouteux de rigidité supérieure à la rigidité du mélange caoutchouteux du reste de la bande de roulement.

## Patentansprüche

1. Luftreifen (1), umfassend:
- zwei Wülste (4);
- zwei Flanken (3), die mit den Wülsten (4) verbunden sind;
- einen Scheitel (2), der auf jeder Seite mit dem radial äußeren Ende jeder der beiden Flanken verbunden ist, wobei der Scheitel beinhaltet:
• eine Gürtelbewehrung mit einer axialen Breite W,
• einen Laufstreifen (5), wobei der Laufstreifen eine Vielzahl von Profilblöcken (50) umfasst, wobei zwei axial benachbarte Profilblöcke durch eine Rille (7) getrennt sind, die sich zumindest teilweise umfänglich erstreckt, wobei jede Rille radial nach innen durch einen Rillenboden (70) begrenzt wird,
wobei das Material, aus dem der Laufstreifen (5) besteht, einen dynamischen Schermodul G*, bei 60 °C und unter einer Wechselbeanspruchung mit 10 Hz von 0.7 MPa, von weniger als 1.25 MPa besitzt, **dadurch gekennzeichnet, dass** der Scheitel (2) eine Versteifungslage (8) beinhaltet, die aus drucksteifen filamentartigen Verstärkungselementen besteht, wobei die filamentartigen Verstärkungselementen mit der Umfangsrichtung C einen Winkel zwischen 50° und 90° bilden, wobei die filamentartigen Verstärkungselemente radial außerhalb der Gürtelbewehrung und axial unter mindestens einer Rille (7) des Laufstreifens angeordnet sind und sich axial mindestens über eine Breite WR erstrecken, die mindestens 50 % der axialen Breite W der Gürtelbewehrung beträgt.

2. Luftreifen nach Anspruch 1, bei dem das Material, aus dem der Laufstreifen (5) besteht, einen dynamischen Schermodul G*, bei 60 °C und unter einer Wechselbeanspruchung mit 10 Hz von 0.7 MPa, von weniger als 1.1 MPa hat.

3. Luftreifen nach Anspruch 1, bei dem das Material, aus dem der Laufstreifen (5) besteht, einen dynamischen Schermodul G*, bei 60 °C und unter einer Wechselbeanspruchung mit 10 Hz von 0.7 MPa, von weniger als 0.9 MPa hat.

4. Luftreifen nach Anspruch 1, bei dem der Young'sche Kompressionsmodul entlang der Erstreckungsrichtung der filamentartigen Elemente der Versteifungslage (8) weniger als 1 GPa beträgt.

5. Luftreifen nach einem der Ansprüche 1 bis 4, bei dem die Versteifungslage (8) unter Einfügung einer Schicht aus einem Elastomermaterial (55) von mindestens 0.5 mm und höchstens 1.5 mm zwischen dem Rillenboden und der Versteifungslage angeordnet ist.

6. Luftreifen nach einem der Ansprüche 1 bis 5, bei dem mindestens 70 % der Breite WR der Versteifungslage (8) auf einer Seite der senkrecht zur Rotationsachse verlaufenden Mittelebene des Luftreifens angeordnet ist.

7. Luftreifen nach einem der Ansprüche 1 bis 6, bei dem sich die Versteifungslage (8) über eine Breite WR erstreckt, die mindestens 70 % und höchstens 100 % der axialen Breite W der Gürtelbewehrung beträgt.

8. Luftreifen nach einem der Ansprüche 1 bis 7, bei dem die Versteifungslage (8B) axial aus mehreren Abschnitten (81B, 82B) von Versteifungslagen ausgebildet ist, die axial durch einen Bereich ohne filamentartige Verstärkungselemente getrennt sind.

9. Luftreifen nach einem der Ansprüche 1 bis 8, bei dem die filamentartigen Verstärkungselemente mit der Umfangsrichtung einen Winkel von mehr als 85° bilden.

10. Luftreifen nach einem der Ansprüche 1 bis 9, der eine Umhüllungslage (64) beinhaltet, die aus Umhüllungsverstärkungen besteht, wobei die Umhüllungsverstärkungen mit der Umfangsrichtung einen Winkel von höchstens 5° bilden.

11. Luftreifen nach Anspruch 10, bei dem die Umhüllungslage (64E) radial außen in Bezug auf die Verstärkungslage (8E) angeordnet ist.

12. Luftreifen nach Anspruch 10, bei dem die Umhüllungslage (64) radial innen in Bezug auf die Versteifungslage (8) angeordnet ist.

13. Luftreifen nach einem der Ansprüche 10 bis 12, bei dem die Umhüllungslage aus mindestens zwei axial getrennten Umhüllungszonen (64Z1, 64Z2) gebildet ist, die beidseits der Versteifungslage (8Z) angeordnet sind.

14. Luftreifen nach einem der Ansprüche 10 bis 13, bei dem die Umhüllungslage oder die beiden Umhüllungszonen (64Z1, 64Z2) in Bezug auf jedes der axialen Enden der breitesten (62) Gürtellage axial um mindestens 3 mm überstehen.

15. Luftreifen nach einem der Ansprüche 1 bis 10 oder 12 bis 14, bei dem mindestens ein Profilblock (50) ein Befestigungselement (51) umfasst, das sich radial von der radial äußeren Oberfläche der Versteifungslage (8) nach außerhalb des Laufstreifens bis zu einer radialen Höhe von mehr als 75 % der radialen Dicke (E) des Laufstreifens erstreckt, wobei das Befestigungselement von variabler axialer Breite ist, von einem Höchstwert von weniger als 25 % der axialen Breite (B) des Blocks aus, wobei diese axiale Breite mit zunehmender radialer Bewegung nach oben hin abnimmt, wobei das Befestigungselement aus einer Kautschukmischung mit einer höheren Steifigkeit als der Steifigkeit der Kautschukmischung des übrigen Laufstreifens besteht.

## Claims

1. Tyre (1) comprising:
- two beads (4);
- two sidewalls (3) connected to the beads (4);
- a crown (2) connected on each side to the radially exterior end of each of the two sidewalls, the crown comprising:
▪ a belt reinforcement of axial width W,
▪ a tread (5), the tread comprising a plurality of tread pattern blocks (50), two axially adjacent tread pattern blocks being separated by a groove (7) extending at least partially circumferentially, each groove being delimited radially towards the inside by a groove bottom (70),
▪ the material of which the tread (5) is made having a dynamic shear modulus G*, at 60°C and under 10 Hz alternating stress loading of 0.7 MPa, of less than 1.25 MPa,
**characterized in that** the crown (2) comprises a stiffening ply (8) made up of filamentary reinforcing elements that are rigid in terms of compression, the said filamentary reinforcing elements forming, with the circumferential direction C, an angle of between 50° and 90°, the said filamentary reinforcing elements being arranged radially on the outside of the belt reinforcement and axially under at least one groove (7) of the tread, and extending axially at least over a width WR representing at minimum 50% of the axial width W of the belt reinforcement.

2. Tyre according to Claim 1, in which the material of which the tread (5) is made has a dynamic shear modulus G*, at 60°C and under 10 Hz alternating stress loading of 0.7 MPa, of less than 1.1 MPa.

3. Tyre according to Claim 1, in which the material of which the tread (5) is made has a dynamic shear modulus G*, at 60°C and under 10 Hz alternating stress loading of 0.7 MPa, of less than 0.9 MPa.

4. Tyre according to Claim 1, in which the Young's modulus in compression in the direction of slenderness of the filamentary elements of the stiffening ply (8) is greater than 1 GPa.

5. Tyre according to one of Claims 1 to 4, in which the stiffening ply (8) is laid with the interposition of a layer of an elastomeric material (55) measuring at least 0.5 mm and at most 1.5 mm between the groove bottom and the said stiffening ply.

6. Tyre according to one of Claims 1 to 5, in which at least 70% of the said width WR of the stiffening ply (8) is arranged on one side of the median plane perpendicular to the axis of rotation of the tyre.

7. Tyre according to any one of Claims 1 to 6, in which the stiffening ply (8) extends over a width WR representing at minimum 70% of the axial width W of the belt reinforcement.

8. Tyre according to any one of Claims 1 to 7, in which the stiffening ply (8B) is configured axially as several sections (81B, 82B) of stiffening ply separated axially by a zone that does not contain any filamentary reinforcing elements.

9. Tyre according to any one of Claims 1 to 8, in which the filamentary reinforcing elements form, with the circumferential direction, an angle greater than 85°.

10. Tyre according to one of Claims 1 to 9 comprising a hooping ply (64) made up of hoop reinforcers, the said hoop reinforcers forming, with the circumferential direction, an angle at most equal to 5°.

11. Tyre according to Claim 10, in which the hooping ply (64E) is arranged radially on the outside of the stiffening ply (8E).

12. Tyre according to Claim 10, in which the hooping ply (64) is arranged radially on the inside of the stiffening ply (8).

13. Tyre according to one of Claims 11 to 12, in which the hooping ply is formed by at least two axially separated hooping zones (64Z1, 64Z2) positioned on either side of the stiffening ply (8Z).

14. Tyre according to one of Claims 11 to 13, in which the hooping ply or the two hooping zones (64Z1, 64Z2) protrude axially beyond each of the axial ends of the widest (62) of the belt plies by a distance of at least 3 mm.

15. Tyre according to one of Claims 1 to 11 or 12 to 14, in which at least one tread pattern block (50) comprises an anchoring element (51) extending radially from the radially exterior surface of the said stiffening ply (8) towards the outside of the tread as far as a radial height greater than 75% of the radial thickness (E) of the tread, in which the said anchoring element is of variable axial width, varying from a maximum value of less than 25% of the axial width (B) of the said block, the said axial width decreasing with radially upwards progression, the said anchoring element being made of a rubber compound with a stiffness greater than the stiffness of the rubber compound of the rest of the tread.
